(19) **Europäisches Patentamt / European Patent Office / Office européen des brevets**

(11) **EP 3 064 980 B1**

(12) # EUROPÄISCHE PATENTSCHRIFT

(45) Veröffentlichungstag und Bekanntmachung des Hinweises auf die Patenterteilung:
**15.04.2020 Patentblatt 2020/16**

(51) Int Cl.:
*G02B 21/00* (2006.01)  *G02B 27/00* (2006.01)
*G02B 9/16* (2006.01)  *G02B 13/14* (2006.01)
*G02B 21/22* (2006.01)  *G02B 21/16* (2006.01)

(21) Anmeldenummer: **16154271.7**

(22) Anmeldetag: **04.02.2016**

(54) **OPTIKSYSTEM UND OPERATIONSMIKROSKOP**

OPTICAL SYSTEM AND OPERATION MICROSCOPE

SYSTEME OPTIQUE ET MICROSCOPE D'OPERATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.03.2015 DE 102015203844**

(43) Veröffentlichungstag der Anmeldung:
**07.09.2016 Patentblatt 2016/36**

(73) Patentinhaber: **Carl Zeiss Meditec AG
07745 Jena (DE)**

(72) Erfinder:
• **HÖGELE, Dr. Artur
73447 Oberkochen (DE)**
• **NOBIS, Dr. Thomas
07743 Jena (DE)**

(74) Vertreter: **Gauss, Nikolai et al
Pfiz/Gauss Patentanwälte PartmbB
Tübingerstraße 26
70178 Stuttgart (DE)**

(56) Entgegenhaltungen:
EP-A1- 1 892 553  EP-A1- 2 199 842
EP-A1- 2 202 556  EP-A2- 2 051 051
EP-A2- 2 707 505

• **Dr Ralf: "Color correction in optical systems or why optical design needs fluoro-phosphate glasses", Dr. Ralf Jedamzik, 31. Mai 2014 (2014-05-31), XP055283941, Gefunden im Internet: URL:http://www.schott.com/advanced_optics/english/download/schott-fluoro-phosphate-glasses-may-2014.pdf [gefunden am 2016-06-27]**
• **Unknown: "Datasheet S-BSM16", , 5. Januar 2004 (2004-01-05), XP055284216, Gefunden im Internet: URL:http://www.oharacorp.com/pdf/esbsm16.pdf [gefunden am 2016-06-28]**
• **Unknown: "Datasheet S-NBH5", , 1. Februar 2006 (2006-02-01), XP055284224, Gefunden im Internet: URL:http://www.ohara-inc.co.jp/en/product/optical/dl/data/esnbh05.pdf [gefunden am 2016-06-28]**

EP 3 064 980 B1

**Beschreibung**

Die Erfindung betrifft ein Operationsmikroskop mit einem Optiksystem für das Abbilden eines Objektbereichs mit einem optischen Strahlengang in einer Bildebene eines Bilderfassungssystems, mit einer von dem optischen Strahlengang durchsetzten ersten Optikbaugruppe und mit einer auf der dem Objektbereich abgewandten Seite der ersten Optikbaugruppe in dem optischen Strahlengang angeordneten zweiten Optikbaugruppe.

Unter einem Operationsmikroskop wird vorliegend ein System mit einer vorzugsweise als ein Stereomikroskop ausgebildeten Mikroskopeinheit verstanden, die an einem Stativ aufgenommen ist und die einer Beobachtungsperson das Beobachten eines Operationsbereichs mit Vergrößerung ermöglicht. Die Mikroskopeinheit kann für das Visualisieren des Operationsbereichs mit einem optischen Beobachtungsstrahlengang ausgelegt sein. Es ist jedoch auch möglich, eine Mikroskopeinheit vorzusehen, die einer Beobachtungsperson digital erfasste Bilder zur Anzeige bringt. Ein Beispiel für ein Operationsmikroskop im Sinne der Erfindung ist etwa das von der Carl Zeiss Meditec AG hergestellte und vertriebene System OPMI® Pentero®.

Aus der US 4,786,155 ist ein Optiksystem der eingangs genannten Art bekannt. Dieses Optiksystem ist in einem Operationsmikroskop angeordnet, das eine Einrichtung für das Visualisieren von Strukturen in dem Objektbereich mittels Licht einer Wellenlänge $\lambda \geq 620$ nm hat. Für das Licht dieser Wellenlänge weist das menschliche Auge zwar eine vergleichsweise geringe Empfindlichkeit auf. Dieses Licht wird jedoch von dem arteriellen Blut im menschlichen Körper nur wenig gestreut bzw. absorbiert. Das Operationsmikroskop enthält eine Beleuchtungseinrichtung, mit der Licht bereitgestellt werden kann, das im Roten und im Infraroten Spektralbereich liegt. In dem Operationsmikroskop gibt es auf der dem Objektbereich abgewandten Seite eines afokalen Vergrößerungssystems oberhalb des Mikroskop-Hauptobjektivs in dem linken und rechten Beobachtungsstrahlengang einen Strahlteiler, der das Beobachtungslicht zu einer Kamera führt, mit der Licht im roten und infraroten Spektralbereich detektiert werden kann. Das Optiksystem in dem Operationsmikroskop enthält eine erste Optikbaugruppe mit einem afokalen Vergrößerungssystem. Dieses Optiksystem weist eine zweite Optikbaugruppe auf, die eine Objektivfunktion hat und die einen die erste Optikbaugruppe durchsetzenden Strahlengang aus einem Objektbereich auf den Bildsensor der Kamera führt.

Die EP 2 051 051 A2 beschreibt ein Optiksystem mit einer ersten Optikbaugruppe und mit einer zweiten Optikbaugruppe, die verstellbare Linsen enthält. Der Objektbereich wird damit durch ein einstellbares Filter hindurch in unterschiedlichen Spektralbereichen erfasst. Die verstellbare Linsenanordnung dient für das dynamische Ausgleichen der in den unterschiedlichen Spektralbereichen auftretenden Farbfehler der ersten Optikbaugruppe.

In der EP 2 707 505 A2 ist ein Mikroskop für die Biowissenschaften mit einer plan-apochromatischen Objektivlinse und einer apochromatisch korrigierten Tubuslinse beschrieben.

Insbesondere für das Untersuchen von Strukturen in einem Objektbereich mit fluoreszierenden Farbstoffen ist es bei Operationsmikroskopen wünschenswert, dass mit einem Bilderfassungssystem nicht nur das sichtbare Licht erfasst werden kann, sondern auch Licht aus dem Infraroten Spektralbereich.

Herkömmliche Operationsmikroskope weisen hierzu ein Bilderfassungssystem mit unterschiedlichen Kameras auf, die auf den sichtbaren und infraroten Spektralbereich abgestimmt sind (siehe z. B. DE 10 2006 006 014 A1).

Aufgabe der Erfindung ist es, ein Optiksystem zu schaffen, das sich zum Einsatz in einem Operationsmikroskop eignet und mit dem bei gleichem Objektabstand, d.h. bei ein und demselben Abstand des Optiksystems von dem Objektbereich das Bild des Objektbereichs nicht nur im sichtbaren, sondern auch im infraroten Spektralbereich einem Bilderfassungssystem mit einer guten Abbildungsqualität zugeführt werden kann.

Diese Aufgabe wird mit dem in Anspruch 1 angegebenen Operationsmikroskop gelöst. Vorteilhafte Weiterbildungen der Erfindung sind in den abhängigen Ansprüchen angegeben.

Die Erfindung beruht auf dem Gedanken, dass die in Operationsmikroskopen eingesetzten Optikbaugruppen, insbesondere Optikbaugruppen mit einem Mikroskop-Hauptobjektiv und mit einem Zoomsystem in der Regel Achromate sind. Damit wird sichergestellt, dass die Fokusablage für Licht, dessen Wellenlänge im roten Wellenlängenbereich liegt ($\lambda \approx 640$ nm), und für Licht, dessen Wellenlänge im blauen Wellenlängenbereich liegt ($\lambda \approx 480$ nm), entsprechend der Norm ISO/FDIS 19012-2 kleiner oder gleich der Schärfentiefe $\delta = n\lambda/2NA^2$ der Optikbaugruppe ist, wobei n der Brechungsindex des Mediums im Objektraum (in Luft gilt: n = 1), NA die objektseitige numerische Apertur, und $\lambda = 480$ nm oder $\lambda = 640$ nm ist.

Solche Achromate haben jedoch in Bezug auf die vorstehend angegebenen Wellenlängen für das im Infraroten Spektralbereich liegende Licht, z. B. für das Licht der Wellenlänge $\lambda = 850$ nm einen erheblichen Farblängs- und auch Farbquerfehler.

Um diese Farblängs- und Farbquerfehler zu verringern, schlägt die Erfindung vor, dass die zweite Optikbaugruppe in dem Optiksystem als ein in dem Wellenlängenbereich des Lichts 625 nm $\leq \lambda \leq$ 850 nm auftretende Farblängsfehler der ersten Optikbaugruppe wenigstens teilweise kompensierendes System ausgebildet ist. Mit dieser Maßnahme lässt sich erreichen, dass der Objektbereich mittels des Optiksystems auch mit Licht untersucht werden kann, das im nahen infraroten und infraroten Spektralbereich liegt, ohne dass hierfür optische Baugruppen in dem Optiksystem auf langen Verlagerungswegen verstellt werden müssen. Insbesondere lässt sich mit dieser Maßnahme erreichen, dass das Verändern des Abstands des Optiksystems von dem Objektbereich bzw. ein Nachfokussieren des Optiksystems nicht dazu führt, dass das dem Bilderfassungssystem zugeführte Bild des Objektbereichs in dem Wellenlängenbereich des Lichts 625 nm ≤ λ ≤ 850 nm gegenüber einem Bild des Objektbereichs mit in dem sichtbaren Spektralbereich liegenden Licht an Schärfe verliert.

Die zweite Optikbaugruppe in dem Optiksystem kann dabei eine positive Brechkraft haben. Insbesondere kann die zweite Optikbaugruppe ein Objektiv sein, z. B. ein Objektiv für eine Farbkamera, das eine Abbildung des Objektbereichs in der Bildebene des Bilderfassungssystems bewirkt.

Indem die zweite Optikbaugruppe wenigstens eine in dem optischen Strahlengang relativ zu der Bildebene des Bilderfassungssystems verlagerbare Linse enthält, ist es möglich, von der Wellenlänge des für das Beobachten des Objektbereichs eingesetzten Lichts abhängige Fehler der Abbildung in der Bildebene des Bilderfassungssystems auszugleichen.

Um von der Wellenlänge des für das Beobachten des Objektbereichs eingesetzten Lichts abhängige Fehler der Abbildung in der Bildebene des Bilderfassungssystems auszugleichen, ist es auch möglich, in dem Optiksystem eine Verlagerbarkeit der zweite Optikbaugruppe als Ganzes für das Einstellen der optischen Weglänge des optischen Strahlengangs aus dem Objektbereich in die Bildebene des Bilderfassungssystems vorzusehen.

Erfindungsgemäß kann die zweite Optikbaugruppe eine erste Linse positiver Brechkraft sowie eine zweite Linse negativer Brechkraft und eine dritte Linse positiver Brechkraft aufweisen. Die erste Linse positiver Brechkraft und die zweite Linse negativer Brechkraft können dabei zu einem Kittglied zusammengefasst sein. Die erste Linse der zweiten Optikbaugruppe ist dann möglichst der ersten Optikbaugruppe in dem optischen Strahlengang zugewandt. Die dritte Linse der zweiten Optikbaugruppe ist hier bevorzugt auf der der Bildebene des Bilderfassungssystems zugewandten Seite in dem optischen Strahlengang angeordnet. Die beiden Linsen mit positiver Brechkraft bestehen dabei bevorzugt aus einem Material mit einer anomalen Teildispersion.

Die Gläser der Linsen mit positiver Brechkraft in der zweiten Optikbaugruppe eines erfindungsgemäßen Optiksystems liegen jeweils abseits der sogenannten Normalgeraden.

Erfindungsgemäße können die beiden Linsen mit positiver Brechkraft insbesondere aus den Gläsern N-FK58, N-FK51A, N-PK52A, N-PK51 der Firma Schott, aus den Gläsern S-FPL53, S-FPL-51, S-FPL51Y, S-FPM3 oder auch S-FPM2 der Firma Ohara bestehen, oder Gläser mit optischen Eigenschaften, die den optischen Eigenschaften der vorgenannten Gläser entsprechen und die eine anomale relative Teildispersion haben.

Die Linse mit negativer Brechkraft in der zweiten Optikbaugruppe besteht günstiger Weise aus einem Material mit geringerer Abbezahl, aber einer möglichst ähnlichen relativen Teildispersion wie sie in den Positivlinsen auftritt. In einem erfindungsgemäßen Optiksystem kann die Linse mit negativer Brechkraft in der zweiten Optikbaugruppe insbesondere aus dem Glas N-KZFS2, N-BK7 oder N-SK11 bestehen.

Vorteilhafte Glaskombinationen für die beiden Linsen mit positiver Brechkraft einerseits und die Linse mit negativer Brechkraft andererseits in der zweiten Optikbaugruppe sind insbesondere: S-FPL51/N-KZFS2, S-FPL53/N-BK7 oder N-PK51/N-SK11. Die Gläser der Linse mit negativer Brechkraft in der zweiten Optikbaugruppe in einem erfindungsgemäßen Optiksystem können, sie müssen aber nicht zwingend eine anomale Teildispersion haben. Die Gläser der Linse mit negativer Brechkraft in der zweiten Optikbaugruppe in einem erfindungsgemäßen Optiksystem können somit auch in der Nähe der Normalgeraden liegen.

Die Erfindung schlägt insbesondere vor, dass die Differenzen der Teildispersionen der beiden Glassorten $\Delta P_{dC}$ und die Differenzen der Abbezahlen $\Delta v$ der beiden Glassorten zueinander in einem Verhältnis $|\Delta P_{dC}/\Delta v|$ stehen, für das gilt $|\Delta P_{dC}/\Delta v| \leq 0{,}1‰$, vorzugsweise $|\Delta P_{dC}/\Delta v| \leq 0{,}03‰$.

Die erste Optikbaugruppe in dem Optiksystem ist ein vorzugsweise für das Licht der Wellenlänge λ≈656 nm und das Licht der Wellenlänge λ≈486 nm korrigiertes achromatisches System. Die erste Optikbaugruppe kann aber auch ein apochromatisches System sein, das vorzugsweise für das Licht der Wellenlänge λ≈656 nm und das Licht der Wellenlänge λ≈486 nm sowie das Licht der Wellenlänge λ≈588 nm korrigiert ist. Die erste Optikbaugruppe kann insbesondere ein afokales Zoomsystem enthalten.

Erfindungsgemäß ist die zweite Optikbaugruppe in dem Optiksystem ein vorzugsweise für das Licht der Wellenlänge λ≈486 nm, λ≈588 nm und λ≈656 nm korrigierter Apochromat oder ein Semiapochromat.

Unter einem Semiapochromat versteht die Erfindung ein Optiksystem, das eine positive Brechkraft hat, bei dem die Fokusablage für Licht, dessen Wellenlänge im roten Wellenlängenbereich liegt (λ≈ 640 nm), und für Licht, dessen Wellenlänge im blauen Wellenlängenbereich liegt (λ≈ 480 nm), sowie für Licht, dessen Wellenlänge Wellenlänge im grünen Wellenlängenbereich liegt (λ≈ 546 nm), entsprechend der Norm ISO/FDIS 19012-2 kleiner oder gleich dem 2,5-fachen der Schärfentiefe $\delta = n\lambda/2NA^2$ ist, wobei n der Brechungsindex des Mediums im Objektraum, NA die objektseitige numerische Apertur, und λ≈ 480 nm oder λ≈ 546 nm oder λ≈ 640 nm ist.

Unter einem Apochromat versteht die Erfindung ein Optiksystem, das eine positive Brechkraft hat, bei dem die Fokusablage für Licht, dessen Wellenlänge im roten Wellenlängenbereich liegt (λ≈ 640 nm), und für Licht, dessen Wellenlänge im blauen Wellenlängenbereich liegt (λ≈ 480 nm), sowie für Licht, dessen Wellenlänge Wellenlänge im grünen Wellenlängenbereich liegt (λ≈ 546 nm), entsprechend der Norm ISO/FDIS 19012-2 kleiner oder gleich der

Schärfentiefe $\delta = n\lambda/2NA^2$ ist, wobei n der Brechungsindex des Mediums im Objektraum, NA die objektseitige numerische Apertur, und $\lambda \approx 480$ nm oder $\lambda \approx 546$ nm oder $\lambda \approx 640$ nm ist.

Von Vorteil ist es, wenn das Operationsmikroskop eine als eine 3-Chip-Kamera ausgebildete Farbkamera mit in der Bildebene des Bilderfassungssystems angeordneten Bildsensoren aufweist. Damit ist es möglich, mit der Farbkamera den Objektbereich des Operationsmikroskops mit Licht zu erfassen, dessen Wellenlänge im sichtbaren und infraroten Spektralbereich liegt. Die Erfindung erstreckt sich auch auf ein Operationsmikroskop mit einer Beleuchtungseinrichtung, die einen Beleuchtungsstrahlengang bereitstellt, der für das Anregen der Fluoreszenz eines Farbstoffs in dem Objektbereich dient und der durch ein Filtersystem für das Ausfiltern von Licht geführt werden kann, dessen Wellenlänge der Wellenlänge des Fluoreszenzlichts des fluoreszierenden Farbstoffs entspricht, das dann der Kamera in dem Operationsmikroskop detektiert wird.

Nachfolgend werden vorteilhafte Ausführungsbeispiele der Erfindung beschrieben, die in den Zeichnungen schematisch dargestellt sind.

Es zeigen:

Fig. 1    ein Operationsmikroskop mit einem Optiksystem für Visualisieren eines Objektbereichs in Okulareinblicken und das Abbilden des Objektbereichs in einer Bildebene eines Bilderfassungssystems mit einem optischen Strahlengang;

Fig. 2    eine erste Optikbaugruppe in dem Optiksystem des Operationsmikroskops, die ein Mikroskop-Hauptobjektivsystem und ein afokales Zoomsystem enthält;

Fig. 3    einen von der Wellenlänge $\lambda$ des Lichts abhängigen Farblängsfehler dieser ersten Optikbaugruppe in dem Optiksystem des Operationsmikroskops;

Fig. 4    eine als ein Kameraobjektiv ausgebildete zweite Optikbaugruppe in dem Optiksystem des Operationsmikroskops;

Fig. 5    einen von der Wellenlänge $\lambda$ des Lichts abhängigen Farblängsfehler der zweiten Optikbaugruppe in dem Optiksystem; und

Fig. 6    einen resultierenden Farblängsfehler der ersten und zweiten Optikbaugruppe in Abhängigkeit von der Wellenlänge $\lambda$ des Lichts.

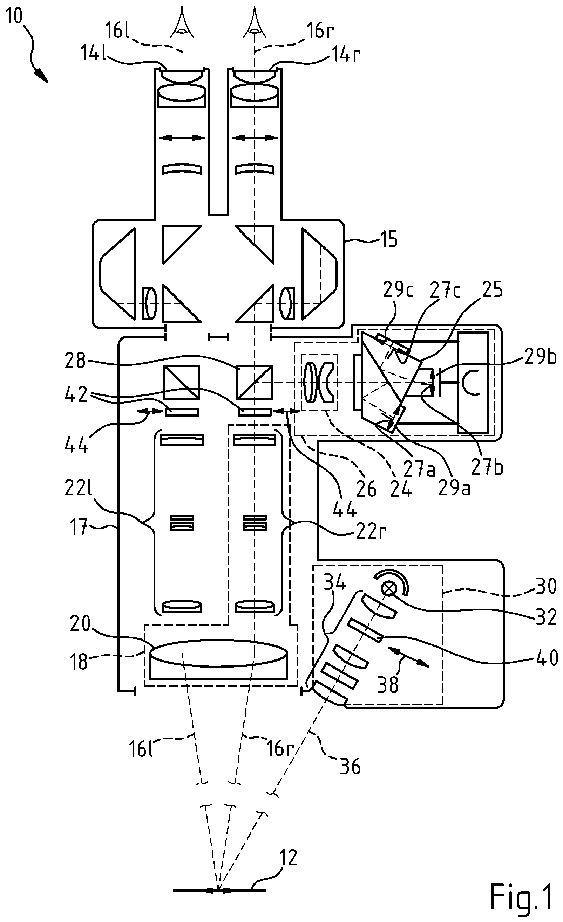

Das in der Fig. 1 gezeigte Operationsmikroskop 10 ermöglicht einer Beobachtungsperson das vergrößerte Betrachten eines Objektbereichs 12 in einem linken und rechten Okulareinblick 14l, 14r eines Binokulartubus 15 mit einem stereoskopischen optischen Strahlengang 16l, 16r. In dem Operationsmikroskop 10 wird das Licht aus dem Objektbereich 12 durch ein Optiksystem geführt, das eine in einem Mikroskopgrundkörper 17 angeordnete erste Optikbaugruppe 18 mit einem Mikroskop-Hauptobjektivsystem 20 und ein afokales Zoomsystem 22r enthält und das eine zweite Optikbaugruppe 24 hat, die als das Kameraobjektiv eines Bilderfassungssystems in Form einer Farbkamera 26 mit Bildebenen 27a, 27b, 27c wirkt, der das Licht aus dem Strahlengang 16r über einen Strahlteiler 28 zugeführt wird. In den Bildebenen 27a, 27b, 27c der Farbkamera 26 gibt es eine Teilerprismenanordnung 25 und unterschiedliche Bildsensoren 29a, 29b, 29c, die dazu dienen, das unterschiedliche, im roten, grünen und blauen Spektralbereich liegende Licht zu erfassen. Der für das Erfassen von Licht im roten Spektralbereich ausgelegte Bildsensor 29a ermöglicht auch das Erfassen von Licht, dessen Wellenlänge im nahen infraroten und infraroten Spektralbereich liegt, d.h. Licht der Wellenlänge in dem Bereich 0,7 $\mu$m bis 5 $\mu$m und Licht, dessen Wellenlänge 5 $\mu$m bis 50 $\mu$m beträgt.

Alternativ hierzu ist es insbesondere auch möglich, die Teilerprismenanordnung 25 so auszulegen, dass mit dem Bildsensor 29c, der für das Erfassen von Licht im blauen Spektralbereich ausgelegt ist, auch das Licht erfasst werden kann, dessen Wellenlänge im nahen infraroten und infraroten Spektralbereich liegt.

Der Beobachtungsstrahlengang 16l in dem Operationsmikroskop durchsetzt ein Zoomsystem 22l, das dem Aufbau des Zoomsystems 22r entspricht.

Das Operationsmikroskop 10 ist an einem Stativ (nicht gezeigt) aufgenommen, das verstellbare Gelenkarme hat. An dem Stativ kann das Operationsmikroskop 10 über dem Objektbereich 12 durch Verstellen der Gelenkarme verlagert werden.

Das Operationsmikroskop 10 enthält eine Beleuchtungseinrichtung 30 mit einer Lichtquelle 32 und einer von dem Licht der Lichtquelle 32 durchsetzbaren Beleuchtungsoptik 34, die einen Beleuchtungsstrahlengang 36 bereitstellt, mit dem der Objektbereich 12 beleuchtet werden kann.

Die Beleuchtungseinrichtung 30 ist dazu ausgelegt, einen oder mehrere Farbstoffe wie z. B. den Farbstoff Indocyaningrün (ICG), den Farbstoff 5ALA oder den Farbstoff Protoporphyrin IX zu Fluoreszenz anzuregen. Hierzu wird mit der Lichtquelle 32 der Beleuchtungseinrichtung 30 Licht bereitgestellt, dessen Wellenlänge im blauen Spektralbereich liegt. Um zu vermeiden, dass in dem Beleuchtungsstrahlengang 36 Licht zu dem Objektbereich 12 geführt wird, dessen Wellenlänge der Wellenlänge des Lichts des in dem Objektbereich 12 angeordneten zu Fluoreszenz angeregten Farbstoffs entspricht, gibt es in der Beleuchtungseinrichtung 30 ein Fluoreszenzanregungsfilter 40, das entsprechend dem Doppelpfeil 38 in den Beleuchtungsstrahlengang 36 eingebracht werden kann um den Spektralbereich des Beleuchtungslichts auszufiltern, der beim Fluoreszieren eines zu Fluoreszenz angeregten Farbstoffs in dem Objektbereich 12 freigesetzt wird.

Damit einer Beobachtungsperson und der Farbkamera 26 im Fluoreszenzbetriebsmodus des Operationsmikroskops 10 ausschließlich das von einem fluoreszierenden Farbstoff in dem Objektbereich 12 freigesetzte Fluoreszenzlicht zugeführt werden kann, enthält das Optiksystem in dem Operationsmikroskop 10 verstellbare Filterelemente 42, die entsprechend dem Doppelpfeil 44 auf der dem Objektbereich abgewandten Seite der Zoomsysteme in den steresokopischen Beobachtungsstrahlengängen 16l, 16r angeordnet werden können. Mittels der Filterelemente 42 kann sichergestellt werden, dass das Licht der Wellenlänge des die Fluoreszenz anregenden Lichts nicht zu den Okulareinblicken 14l, 14r des Binokulartubus 15 und zu der Farbkamera 26 gelangt.

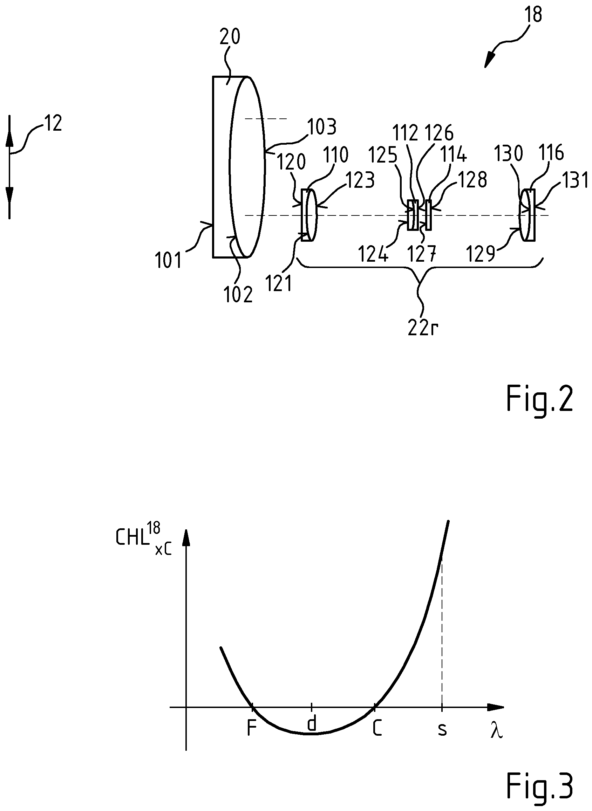

Die Fig. 2 zeigt die erste Optikbaugruppe 18 in dem Optiksystem des Operationsmikroskops 10. Das Mikroskop-Hauptobjektivsystem 20 ist ein Kittglied mit den optisch wirksamen Flächen 101, 102 und 103. Das afokale Zoomsystem 22r hat vier Glieder 110, 112, 114, 116. Die Glieder 110, 116 des Zoomsystems 22r haben eine positive Brechkraft und sind jeweils als Kittglieder gestaltet. Die Glieder 112, 114 in dem afokalen Zoomsystem 22r sind verlagerbar angeordnet. Das Glied 112 ist hier ebenfalls als ein Kittglied ausgeführt. Das Zoomsystem 22r hat die optisch wirksamen Flächen 120, 121, 123, 124, 125, 126, 127, 128, 129, 130 und 131.

Die Optikbaugruppe 18 ist ein Achromat, der in Bezug auf das Licht der Wellenlänge $\lambda$ = 656 nm (C-Linie) den Farblängsfehler CHL der Wellenfront für das Licht der Wellenlänge $\lambda$ = 486 nm (F-Linie) vollständig kompensiert, d. h. $CHL^{18}_{FC} = 0$.

Die Fig. 3 zeigt den auf die C-Linie bezogenen, von der Wellenlänge $\lambda$ des Lichts (x-Linie) abhängigen Farblängsfehler $CHL^{18}_{xC}$ dieser ersten Optikbaugruppe in dem Optiksystem des Operationsmikroskops.

Dem Aufbau des Optiksystems in dem Operationsmikroskop 10 liegt die Überlegung zugrunde, dass sich der auf die C-Linie bezogene, von einer beliebigen Wellenlänge des Lichts (x-Linie) abhängige Farblängsfehler $CHL^{18}_{xC}$ der Wellenfront in Bezug auf die C-Linie in guter Näherung wie folgt abschätzen lässt:

$$CHL^{18}_{xC} = \alpha_{xC} \cdot \sum_i \frac{1}{2} y_i^2 \cdot \varphi_i + \sum_i \beta_{xC,i} \cdot \frac{1}{2} y_i^2 \cdot \frac{\varphi_i}{v_i}$$

wobei $\alpha_{xC}$ den Anstieg der auf die C-Linie bezogenen Normalgeraden für das Licht der Wellenlänge x, $\beta_{xC,i}$ den Abstand eines spezifischen Glases einer Linse i von dieser Normalgeraden, $y_i$ die Randstrahlhöhen, $v_i$ die Abbezahlen der Materialien $v = (n_d-1)/(n_F -n_C)$, und $\varphi_i$ die Brechkräfte der Linsen i bezeichnet.

Die Erfinder haben herausgefunden, dass, wenn in der Optikbaugruppe 18 für die Achromatisierung ausschließlich Normalgläser eingesetzt werden (d. h. $\beta_{xC,i} = 0$), die auf die C-Linie Farblängsfehler für das Licht der Wellenlänge $\lambda$ = 588 nm (d-Linie) und $\lambda$ = 850 nm (s-Linie) mit

$$CHL^{18}_{dC} = \alpha_{dC} \cdot \sum_i \frac{1}{2} y_i^2 \cdot \varphi_i \qquad \alpha_{dC} = +0{,}00046173$$

$$CHL^{18}_{sC} = \alpha_{sC} \cdot \sum_i \frac{1}{2} y_i^2 \cdot \varphi_i \qquad \alpha_{sC} = -0{,}002304493$$

zueinander in dem folgenden Verhältnis stehen:

$$\frac{CHL_{sC}}{CHL_{dC}} = \frac{\alpha_{sC}}{\alpha_{dC}} \approx -5$$

D. h., die Farbfehler für das Licht im nahen Infraroten und im Infraroten sind bei der Optikbaugruppe 18 etwa 5 mal so groß wie im sichtbaren Spektralbereich, das Vorzeichen dieser Farbfehler ist jedoch dem Vorzeichen der Farbfehler im sichtbaren Spektralbereich entgegengesetzt.

Die zweite Optikbaugruppe 24 in dem Optiksystem des Operationsmikroskops 10 dient dazu, den Farbfehler des der Farbkamera 26 zugeführten Bilds des Objektbereichs im nahen Infraroten und im Infraroten zu verringern. Dies wird dadurch erreicht, dass die Farbfehler der Optikgruppe 24 vorzugsweise für Licht der Wellenlänge λ= 656 nm (C-Linie), λ= 588 nm (d-Linie) und A= 486 nm (F-Linie) gleichzeitig vollständig kompensiert sind. Der Farbfehler der Optikbaugruppe 24 für die Wellenlänge λ= 850 nm (s-Linie) besitzt dann nämlich ein entgegengesetztes Vorzeichen zum entsprechenden Farbfehler der Optikbaugruppe 18. Das hat zur Folge, dass der Farbfehler im nahen Infraroten und im Infraroten der Optikbaugruppe 18 durch den Farbfehler der Optikbaugruppe 24 im nahen Infraroten und im Infraroten wenigstens teilweise aufgehoben wird. Weil die Optikbaugruppe 18 und die Optikbaugruppe 24 für das Licht im sichtbaren Spektralbereich jeweils vollständig kompensiert sind, kann dann durch die Kombination der Optikbaugruppe 18 mit der Optikbaugruppe 24 in dem Optiksystem des Operationsmikroskops 10 der Farbkamera 26 ein Bild zugeführt werden, das auch im sichtbaren Spektralbereich keine Farbfehler hat.

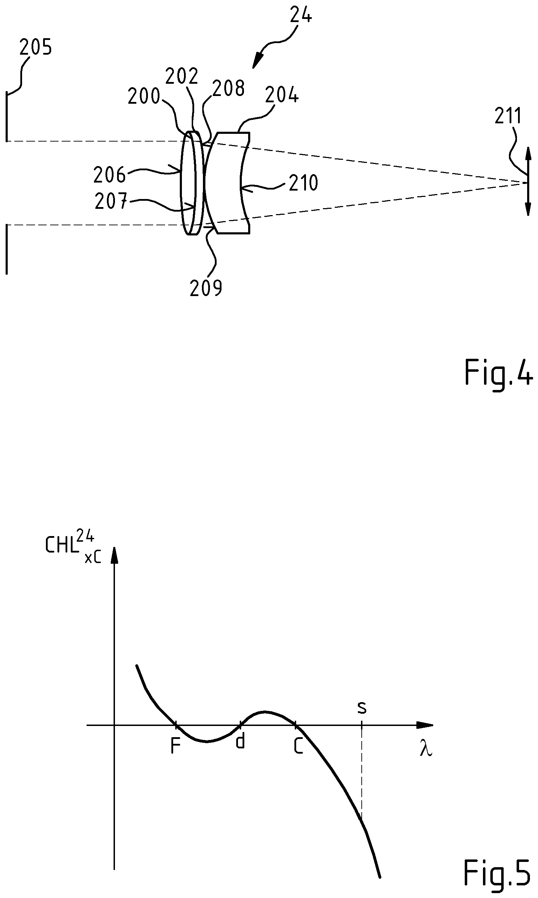

Die Fig. 4 zeigt die zweite Optikbaugruppe 24 in dem Optiksystem des Operationsmikroskops 10. Die Optikbaugruppe 24 hat eine positive Brechkraft. Sie enthält drei Linsen 200, 202 und 204. Die Linsen 200, 202 bilden ein Kittglied, das eine positive Brechkraft hat. Die Brechkraft der Linse 204 ist positiv. Die Linsen 200 und 204 bestehen aus einem Linsenmaterial, dessen Teildispersion in dem sichtbaren Spektralbereich anomal ist. Die Linse 202 in dem Kittglied besteht aus einem der oben erläuterten, zum Material der Positivlinsen passenden Material. Die Optikbaugruppe 24 hat die optisch wirksamen Flächen 206, 207, 208, 209 und 210. Sie ist ein zweigliedriger Apochromat, der in Bezug auf das Licht der Wellenlänge λ= 656 nm (C-Linie) den Farblängsfehler $CHL^{24}$ der Wellenfront für das Licht der Wellenlänge λ= 486 nm (F-Linie) und für das Licht der Wellenlänge λ= 588 nm (d-Linie) vollständig kompensiert, d. h. $CHL_{FC}^{24} = 0$ und $CHL_{dC}^{24} = 0$. Dies wird durch die o.g. Glasauswahl sichergestellt.

Die Fig. 5 zeigt den auf die C-Linie bezogenen, von der Wellenlänge λ des Lichts (x-Linie) abhängigen Farblängsfehler $CHL_{xC}^{24}$ dieser zweiten Optikbaugruppe 24 in dem Optiksystem des Operationsmikroskops 10.

Die Erfinder haben herausgefunden, dass der Restfehler des zweigliedrigen Apochromaten ins nahe Infrarote bei Licht der Wellenlänge λ= 852 nm (s-Linie) in guter Näherung wie folgt abgeschätzt werden kann:

$$CHL_{sC,Apo} = \frac{1}{2} \cdot y_0^2 \cdot \varphi \cdot \frac{\Delta P_{sC}}{\Delta v}$$

wobei, $y_0$ die Randstrahlhöhe und φ die Brechkraft des zweigliedrigen Apochromaten sind. Die Größe $\Delta P_{sC}$ beschreibt die Differenz der relativen Teildispersionen der beiden verwendeten Glassorten im Wellenlängenbereich zwischen der s-Linie und der C-Linie, die Größe $\Delta v$ beschreibt den Unterschied der Abbezahlen der beiden Gläser.

Wie sich der nachfolgenden Tabelle entnehmen lässt, schwanken die Werte der Größe $\Delta P_{sC}/\Delta v$ für einige der o.g. Glaspaare zwischen +0,00051 und + 00042.

Tabelle zu Werten der Größe $\Delta P_{sC}/\Delta v$ für unterschiedliche Glaspaare

| Glaspaar | $\Delta P$ sC | $\Delta v$ | $\Delta P / \Delta v$ sC |
|---|---|---|---|
| S-FPL51 / N-KZFS2 | 0,01410 | 27,54 | 0,000512 |
| | | | |
| S-FPL53 / N-BK7 | 0,01290 | 30,78 | 0,000419 |
| | | | |
| N-PK51 / N-SK11 | 0,00760 | 16,18 | 0,000470 |

Die Schwankungen der Werte der Größe $\Delta P_{sC}/\Delta v$ für unterschiedliche Glassorten nutzt die Erfindung aus, um damit durch eine geeignete Auswahl der Glassorten der Linsen 200, 202, 204 in der Optikbaugruppe 24 den Farblängsfehler $CHL_{xC}$ der ersten Optikbaugruppe 18 wenigstens teilweise zu kompensieren. Für den Farblängsfehler der zweiten Optikbaugruppe in dem infraroten Spektralbereich wird hierfür ein Vorhalt mit einem zu dem Vorzeichen des Farblängsfehlers der ersten Optikbaugruppe entgegengesetzten Vorzeichen eingestellt.

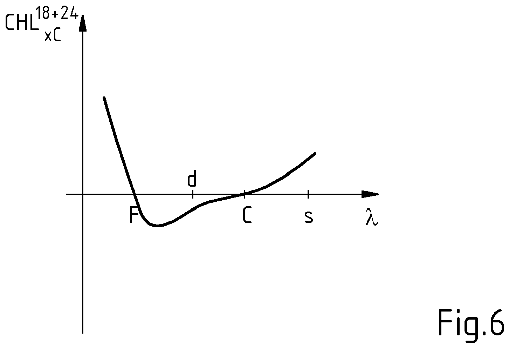

Die Fig. 6 zeigt den resultierenden Farblängsfehler $CHL_{xC}^{18+\ 24}$ der ersten Optikbaugruppe 18 und der zweiten Optikbaugruppe 24 in Abhängigkeit von der Wellenlänge λ des Lichts.

In dem Optiksystem des Operationsmikroskops 10 kompensiert damit die zweite Optikbaugruppe 24 den Farblängsfehler der ersten Optikbaugruppe 18 bis auf ein einen Restfehler, der sich für das Abbilden des Objektbereichs 12 mit Licht im infraroten Spektralbereich auf dem Bildsensor der Kamera nicht auswirkt.

Ein Designbeispiel für die erste Optikbaugruppe 18 und die zweite Optikbaugruppe 24 in dem Optiksystem des Operationsmikroskops 10 ist in den nachfolgenden Tabellen wiedergegeben:

Tabelle Optikbaugruppe 18

| Optisch wirksame Fläche | Radius r/mm | Dicke bzw. Luftabstand d/mm | Freier Durchmesser $d_F$/mm | Medium (Glasart) |
|---|---|---|---|---|
| 12 | Objekt | 195.154 | 25 | AIR |
| 101 | 187.4 | 2 | 25 | BAF3 |
| 102 | 75.6 | 8 | 25 | CAF2 |
| 103 | -111.5 | 12.407 | | AIR |
| 120 | 32.181 | 1.2 | 12 | S-NBH8 |
| 121 | 16.404 | 2.2 | 12 | S-PHM53 |
| 123 | -180.98 | 0.986 | 12 | AIR |
| 124 | -19.376 | 1.4 | 7 | N-SF6 |
| 125 | -9.183 | 1 | 7 | N-SK16 |
| 126 | 41.591 | 1.6 | 7 | AIR |
| 127 | -41.591 | 1 | 7 | N-SK16 |
| 128 | 41.591 | 29.808 | 7 | AIR |
| 129 | 180.98 | 2.2 | 12 | S-PHM53 |
| 130 | -16.404 | 1.2 | 12 | S-NBH8 |
| 131 | -32.181 | 2 | | AIR |

Tabelle Optikbaugruppe 24

| Optisch wirksame Fläche | Radius r/mm | Dicke bzw. Luftabstand d/mm | Freier Durchmesser $d_F$/mm | Medium (Glasart) |
|---|---|---|---|---|
| 205 | Pupille | 10-60 | 12 | AIR |
| 206 | 33.978 | 3 | 12 | S-FPL51 |
| 207 | -18.260 | 1.5 | 12 | N-KZFS2 |
| 208 | 56.630 | 0.1 | 12 | AIR |
| 209 | 25.489 | 2 | 12 | S-FPL51 |
| 210 | 732.328 | 46.65 | 12 | AIR |
| 211 | Bild | | | |

Dabei gilt:

| Medium (Glasart) | Brechzahl ne bei 546nm | Abbezahl ve bei 546nm |
|---|---|---|
| BAF3 | 1.585650 | 46.17 |
| CAF2 | 1.434966 | 94.69 |
| S-NBH8 | 1.725384 | 34.47 |
| S-PHM53 | 1.605199 | 65.15 |
| N-SF6 | 1.812659 | 25.16 |

(fortgesetzt)

| Medium (Glasart) | Brechzahl ne bei 546nm | Abbezahl ve bei 546nm |
|---|---|---|
| N-SK16 | 1.622863 | 60.08 |
| S-FPL51 | 1.498454 | 81.14 |
| N-KZSF2 | 1.560823 | 53.83 |
| AIR | 1 | - |

Es sei bemerkt, dass als Linsenmaterial für die Linsen anomaler Teildispersion in der zweiten Optikbaugruppe grundsätzlich auch die Gläser N-FK58, N-FK51A, N-PK52A, N-PK51 der Firma Schott, die Gläser S-FPL53, S-FPL-51, S-FPL51Y, S-FPM3 oder auch S-FPM2 der Firma Ohara, oder Gläser mit optischen Eigenschaften, die den optischen Eigenschaften der vorgenannten Gläser entsprechen und die eine anomale Teildispersion haben.

Zu bemerken ist, dass das Mikroskop-Hauptobjektivsystem 20 in dem vorstehend beschriebenen Operationsmikroskop 10 grundsätzlich auch als ein fokussierbares Mikroskop-Hauptobjektiv ausgebildet sein kann. Die Auslegung der Optikbaugruppe 24 nach der vorstehend wiedergegebenen Tabelle gewährleistet, dass auch bei Fokussieren des Mikroskop-Hauptobjektivs in den Bildebenen 27a, 27b und 27c jeweils ein Bild des Objektbereichs 12 erzeugt wird, das nicht nur für das Licht im sichtbaren Spektralbereich, sondern auch für das Licht im nahen Infraroten nicht an Schärfe verliert, ohne dass es hierfür einer Verlagerung der Optikbaugruppe 24 als Ganzes oder der Linsen in dieser Optikbaugruppe in dem Strahlengang 16r bedarf.

Zusammenfassend ist insbesondere folgendes festzuhalten: Die Erfindung betrifft ein Optiksystem für das Abbilden eines Objektbereichs 12 mit einem optischen Strahlengang 16r, 16r' in einer Bildebene 27a, 27b, 27c eines Bilderfassungssystems. Das Optiksystem enthält eine von dem optischen Strahlengang 16r durchsetzte erste Optikbaugruppe 18 und eine auf der dem Objektbereich 12 abgewandten Seite der ersten Optikbaugruppe 18 in dem optischen Strahlengang 16r angeordneten zweiten Optikbaugruppe 24. Die zweite Optikbaugruppe 24 ist als ein in dem Wellenlängenbereich des Lichts 625 nm ≤ A ≤ 850 nm auftretende Farblängsfehler der ersten Optikbaugruppe 18 wenigstens teilweise kompensierendes System ausgebildet.

**Bezugszeichenliste**

| | |
|---|---|
| 10 | Operationsmikroskop |
| 12 | Objektbereich |
| 14l | Okulareinblick links |
| 14r | Okulareinblick rechts |
| 15 | Binokulartubus |
| 16l | Strahlengang links |
| 16r | Strahlengang rechts |
| 16r' | Strahlengang rechts |
| 17 | Mikroskopgrundkörper |
| 18 | erste Optikbaugruppe |
| 20 | Mikroskop-Hauptobjektivsystem |
| 22l, 22r | Zoomsystem |
| 24 | zweite Optikbaugruppe |
| 25 | Teilerprismenanordnung |
| 26 | Farbkamera |
| 27a, b, c | Bildebenen |
| 28 | Strahlteiler |
| 29a, b, c | Bildsensoren |
| 30 | Beleuchtungseinrichtung |
| 32 | Lichtquelle |
| 34 | Beleuchtungsoptik |
| 36 | Beleuchtungsstrahlengang |
| 38 | Doppelpfeil |
| 40 | Fluoreszenzanregungsfilter |
| 42 | Filterelement |

(fortgesetzt)

| | |
|---|---|
| 44 | Doppelpfeil |
| 101, 102, 103 | optisch wirksame Fläche |
| 110, 112, 114, 116 | Glied |
| 120, 121, 123, 124, 125, 126, 127, 128, 129, 130, 131 | optisch wirksame Fläche |
| 200, 202, 204 | Linse |
| 205 | Pupille |
| 206, 207, 208, 209, 210 | optisch wirksame Fläche |
| 211 | Bild |

## Patentansprüche

1. Operationsmikroskop mit einem Optiksystem für das Abbilden eines Objektbereichs (12) mit einem optischen Strahlengang (16r) in einer Bildebene (27a, 27b, 27c) eines Bilderfassungssystems,
   mit einer von dem optischen Strahlengang (16r) durchsetzten ersten Optikbaugruppe (18); und
   mit einer auf der dem Objektbereich (12) abgewandten Seite der ersten Optikbaugruppe (18) in dem optischen Strahlengang (16r) angeordneten zweiten Optikbaugruppe (24), wobei
   die zweite Optikbaugruppe (24) als ein in dem Wellenlängenbereich des Lichts 625 nm $\leq \lambda \leq$ 850 nm auftretende Farblängsfehler der ersten Optikbaugruppe (18) wenigstens teilweise kompensierendes System ausgebildet ist,
   **dadurch gekennzeichnet, dass**
   die erste Optikbaugruppe (18) ein achromatisches System ist, das für das Licht einer ersten Wellenlänge und einer zweiten Wellenlänge korrigiert ist, wobei die erste Wellenlänge in dem Wellenlängenbereich $\lambda \approx$ 486 nm und die zweite Wellenlänge in dem Wellenlängenbereich $\lambda \approx$ 656 nm liegt und in dem für die Achromatisierung ausschließlich Normalgläser eingesetzt werden, für welche die Farbfehler für das Licht im nahen Infraroten und im Infraroten etwa 5-mal so groß wie im sichtbaren Spektralbereich sind, wobei
   das Vorzeichen der Farbfehler im nahen Infraroten und im Infraroten dem Vorzeichen der Farbfehler im sichtbaren Spektralbereich entgegengesetzt ist und
   die zweite Optikbaugruppe (24) ein für das Licht der ersten Wellenlänge, die in dem Wellenlängenbereich $\lambda \approx$ 486 nm liegt, und für das Licht der zweiten Wellenlänge, die in dem Wellenlängenbereich $\lambda \approx$ 656 nm liegt, sowie für das Licht einer dritten Wellenlänge, die in dem Wellenlängenbereich $\lambda \approx$ 588 nm liegt, korrigierter Apochromat oder Semiapochromat ist.

2. Operationsmikroskop nach Anspruch 1, **dadurch gekennzeichnet, dass** die zweite Optikbaugruppe (24) eine erste Linse (200) positiver Brechkraft aufweist und eine zweite Linse (202) negativer Brechkraft sowie eine dritte Linse (204) positiver Brechkraft enthält, wobei
   die erste Linse (200) aus einem ersten Glasmaterial hergestellt ist und die zweite Linse (202) aus einem zweiten Glasmaterial hergestellt ist und die dritte Linse (204) aus dem ersten oder einem dritten Glasmaterial hergestellt ist, wobei die Differenzen $\Delta P_{dC}$ der Teildispersionen des ersten Glasmaterials oder des dritten Glasmaterials zu der Teildispersion des zweiten Glasmaterials und die die Differenzen $\Delta v$ der Abbezahlen des ersten Glasmaterials oder des dritten Glasmaterials zu der Abbezahl des zweiten Glasmaterials zueinander in einem Verhältnis $|\Delta P_{dC}/\Delta v|$ stehen, für das gilt: $|\Delta P_{dC}/\Delta v| \leq 0{,}1‰$.

3. Operationsmikroskop nach Anspruch 2, **dadurch gekennzeichnet, dass** die Differenzen $\Delta P_{dC}$ der Teildispersionen des ersten Glasmaterials oder des dritten Glasmaterials zu der Teildispersion des zweiten Glasmaterials und die die Differenzen $\Delta v$ der Abbezahlen des ersten Glasmaterials oder des dritten Glasmaterials zu der Abbezahl des zweiten Glasmaterials zueinander in einem Verhältnis $|\Delta P_{dC}/\Delta v|$ stehen, für das gilt: $|\Delta P_{dC}/\Delta v| \leq 0{,}03‰$.

4. Operationsmikroskop nach einem der Ansprüche 2 bis 3, **dadurch gekennzeichnet, dass** die erste Linse (200) positiver Brechkraft und die zweite Linse (202) negativer Brechkraft zu einem Kittglied zusammengefasst sind, und/oder dass die erste Linse (200) der zweiten Optikbaugruppe (24) der ersten Optikbaugruppe (18) in dem optischen Strahlengang zugewandt ist, und/oder dass die dritte Linse (204) der zweiten Optikbaugruppe (24) auf der der Bildebene des Bilderfassungssystems zugewandten Seite in dem optischen Strahlengang angeordnet ist.

5.  Operationsmikroskop nach einem der Ansprüche 2 bis 4, **dadurch gekennzeichnet, dass** die erste Linse (200) der zweiten Optikbaugruppe (24) und/oder die dritte Linse (204) aus einem Linsenmaterial hergestellt ist, das eine anomale Teildispersion hat.

6.  Operationsmikroskop nach einem der Ansprüche 1 bis 5, **dadurch gekennzeichnet, dass** die erste Optikbaugruppe (18) ein afokales Zoomsystem enthält.

7.  Operationsmikroskop nach einem der Ansprüche 1 bis 6, **dadurch gekennzeichnet, dass** die zweite Optikbaugruppe (24) eine positive Brechkraft hat.

8.  Operationsmikroskop nach einem der Ansprüche 1 bis 7, **dadurch gekennzeichnet, dass** die zweite Optikbaugruppe (24) ein eine Abbildung des Objektbereichs (12) in der Bildebene (27a, 27b, 27c) des Bilderfassungssystems bewirkendes Objektiv ist.

9.  Operationsmikroskop nach einem der Ansprüche 1 bis 8, **dadurch gekennzeichnet, dass** die zweite Optikbaugruppe (24) wenigstens eine in dem optischen Strahlengang (16r) relativ zu der Bildebene (27a, 27b, 27c) des Bilderfassungssystems verlagerbare Linse (200, 2,2, 204) enthält.

10. Operationsmikroskop nach Anspruch 9, **gekennzeichnet durch** eine verlagerbar angeordnete zweite Optikbaugruppe (24) für das Einstellen der optischen Weglänge des optischen Strahlengangs (16r) aus dem Objektbereich (12) in die Bildebene (27a, 27b, 27c) des Bilderfassungssystems.

11. Operationsmikroskop nach einem der Ansprüche 1 bis 10, **gekennzeichnet durch** eine als eine 3-Chip-Kamera ausgebildete Farbkamera (26) mit in der Bildebene des Bilderfassungssystems angeordneten Bildsensoren.

12. Operationsmikroskop nach Anspruch 11, **gekennzeichnet durch** eine Beleuchtungseinrichtung (30) mit einem Beleuchtungsstrahlengang (36), der für das Anregen der Fluoreszenz eines Farbstoffs in dem Objektbereich (12) dient und der ein Filtersystem für das Ausfiltern von Licht geführt werden kann, dessen Wellenlänge der Wellenlänge des Fluoreszenzlichts des fluoreszierenden Farbstoffs entspricht.


**Claims**

1.  Surgical microscope comprising an optical system for imaging an object region (12) into an image plane (27a, 27b, 27c) of an image capturing system by way of an optical beam path (16r),
    comprising a first optical assembly (18) through which the optical beam path (16r) passes; and comprising a second optical assembly (24) that is disposed in the optical beam path (16r) on the side of the first optical assembly (18) that faces away from the object region (12), wherein
    the second optical assembly (24) is embodied as a system that at least partly compensates a longitudinal chromatic aberration of the first optical assembly (18) that occurs in the wavelength range of the light between 625 nm $\leq \lambda \leq$ 850 nm, **characterized in that**
    the first optical assembly (18) is an achromatic system, which is corrected for light at a first wavelength and at a second wavelength, wherein the first wavelength lies in the wavelength region of $\lambda \approx$ 486 nm and the second wavelength lies in the wavelength region of $\lambda \approx$ 656 nm and only normal glasses are used for achromatization, the chromatic aberration of the light in said normal glasses being approximately 5-times as large in the near infrared and in the infrared than in the visible spectral range, wherein
    the sign of the chromatic aberrations in the near infrared and in the infrared is opposite to the sign of the chromatic aberrations in the visible spectral range and
    the second optical assembly (24) is an apochromat or semi-apochromat that is corrected for light at the first wavelength, which lies in the wavelength region of $\lambda \approx$ 486 nm, and for light at the second wavelength, which lies in the wavelength region of $\lambda \approx$ 656 nm, and for light at a third wavelength, which lies in the wavelength region of $\lambda \approx$ 588 nm.

2.  Surgical microscope according to Claim 1, **characterized in that** the second optical assembly (24) has a first lens (200) with positive refractive power and contains a second lens (202) with negative refractive power and a third lens (204) with positive refractive power, wherein
    the first lens (200) is produced from a first glass material and the second lens (202) is produced from a second glass material and the third lens (204) is produced from the first glass material or a third glass material, wherein the differences $\Delta P_{dC}$ between the partial dispersions of the first glass material or the third glass material and the partial dispersion of the second glass material and the differences $\Delta v$ between the Abbe numbers of the first glass material or the third glass material and the Abbe number of the second glass material with respect to one another have a ratio $|\Delta P_{dC}/\Delta v|$, for which the following applies:

$|\Delta P_{dC}/\Delta v| \leq 0.1$ per mille.

3. Surgical microscope according to Claim 2, **characterized in that** the differences $\Delta P_{dC}$ between the partial dispersions of the first glass material or the third glass material and the partial dispersion of the second glass material and the differences $\Delta v$ between the Abbe numbers of the first glass material or the third glass material and the Abbe number of the second glass material with respect to one another have a ratio $|\Delta P_{dC}/\Delta v|$, for which the following applies:

$|\Delta P_{dC}/\Delta v| \leq$ **0.03** per mille.

4. Surgical microscope according to either of Claims 2 and 3, **characterized in that** the first lens (200) with positive refractive power and the second lens (202) with negative refractive power are combined as a cemented element and/or **in that** the first lens (200) of the second optical assembly (24) faces the first optical assembly (18) in the optical beam path and/or **in that** the third lens (204) of the second optical assembly (24) is disposed in the optical beam path on the side facing the image plane of the image capturing system.

5. Surgical microscope according to any one of Claims 2 to 4, **characterized in that** the first lens (200) of the second optical assembly (24) and/or the third lens (204) is/are produced from a lens material with anomalous partial dispersion.

6. Surgical microscope according to any one of Claims 1 to 5, **characterized in that** the first optical assembly (18) contains an afocal zoom system.

7. Surgical microscope according to any one of Claims 1 to 6, **characterized in that** the second optical assembly (24) has positive refractive power.

8. Surgical microscope according to any one of Claims 1 to 7, **characterized in that** the second optical assembly (24) is an objective lens that brings about imaging of the object region (12) in the image plane (27a, 27b, 27c) of the image capturing system.

9. Surgical microscope according to any one of Claims 1 to 8, **characterized in that** the second optical assembly (24) contains at least one lens (200, 202, 204) that is displaceable in the optical beam path (16r) relative to the image plane (27a, 27b, 27c) of the image capturing system.

10. Surgical microscope according to Claim 9, **characterized by** a displaceably disposed second optical assembly (24) for setting the optical path length of the optical beam path (16r) from the object region (12) to the image plane (27a, 27b, 27c) of the image capturing system.

11. Surgical microscope according to any one of Claims 1 to 10, **characterized by** a colour camera (26), embodied as a 3-chip camera, with image sensors disposed in the image plane of the image capturing system.

12. Surgical microscope according to Claim 11, **characterized by** an illumination device (30) with an illumination beam path (36), which is used to excite the fluorescence of a dye in the object region (12) and which can be guided through a filter system for filtering-out light whose wavelength corresponds to the wavelength of the fluorescence light of the fluorescent dye.

**Revendications**

1. Microscope d'opération :

avec un système optique pour la reproduction d'une zone d'objet (12) :

avec un trajet de faisceau (16r) dans un plan d'image (27a, 27b, 27c) d'un système de détection d'image ;
avec un premier module optique (18) entrecoupé par le trajet de faisceau (16r) ; et
avec un deuxième module optique (24) disposé sur le côté, opposé à la zone d'objet (12), du premier module optique (18) dans le trajet de faisceau (16r) ;

le deuxième module optique (24) étant réalisé sous la forme d'un système compensant au moins en partie une aberration chromatique longitudinale se produisant à 625 nm $\leq \lambda \leq$ 850 nm pour le premier module optique (18) dans la plage de longueurs d'onde de la lumière ;

**caractérisé en ce que** :

le premier module optique (18) est un système achromatique corrigé pour la lumière d'une première longueur d'onde et d'une deuxième longueur d'onde, la première longueur d'onde se situant dans la plage de longueurs d'onde $\lambda \approx$ 486 nm et la deuxième longueur d'onde se situant dans la plage de longueurs d'onde $\lambda \approx$ 656 nm et des verres normaux étant exclusivement utilisés pour l'achromatisation pour lesquels l'aberration chromatique est approximativement 5 fois aussi importante pour la lumière dans les proches infrarouges et les infrarouges que pour la lumière dans la plage visible du spectre ;

le signe de l'aberration chromatique dans les proches infrarouges et dans les infrarouges est opposé au signe de l'aberration chromatique dans la plage visible du spectre ; et

le deuxième module optique (24) est un réflecteur apochromatique ou un réflecteur semi-apochromatique pour la lumière de la première longueur d'onde se situant dans la plage de longueurs d'onde $\lambda \approx$ 486 nm et pour la lumière de la deuxième longueur d'onde se situant dans la plage de longueurs d'onde $\lambda \approx$ 656 nm ainsi que pour la lumière d'une troisième longueur d'onde se situant dans la plage de longueurs d'onde $\lambda \approx$ 588 nm.

2. Microscope d'opération selon la revendication 1, **caractérisé en ce que** le deuxième module optique (24) comporte une première lentille (200) de réfringence positive et contient une deuxième lentille (202) de réfringence négative ainsi qu'une troisième lentille (204) de réfringence positive ;

la première lentille (200) étant fabriquée à partir d'un premier matériau en verre et la deuxième lentille (202) étant fabriquée à partir d'un deuxième matériau en verre et la troisième lentille (204) étant fabriquée à partir d'un premier ou d'un troisième matériau en verre, les différences $\Delta P_{dC}$ entre les dispersions partielles du premier matériau en verre ou du troisième matériau en verre et la dispersion partielle du deuxième matériau en verre et la différences $\Delta \upsilon$ entre l'amortissement du premier matériau en verre ou du troisième matériau en verre et l'amortissement du deuxième matériau en verre l'un par rapport à l'autre étant dans un rapport $|\Delta P_{dC}/\Delta \upsilon|$, avec : $|\Delta P_{dC}/\Delta \upsilon| \leq 0,1$ ‰.

3. Microscope d'opération selon la revendication 2, **caractérisé en ce que** la différences $\Delta P_{dc}$ entre les dispersions partielles du premier matériau en verre ou du troisième matériau en verre et la dispersion partielle du deuxième matériau en verre et les différences $\Delta \upsilon$ entre l'amortissement du premier matériau en verre ou du troisième matériau en verre et l'amortissement du deuxième matériau en verre l'un par rapport à l'autre étant dans un rapport $|\Delta P_{dC}/\Delta \upsilon|$, avec : $|\Delta P_{dC}/\Delta \upsilon| \leq 0,03$ ‰.

4. Microscope d'opération selon l'une quelconque des revendications 2 à 3, **caractérisé en ce que** la première lentille (200) de réfringence positive et la deuxième lentille (202) de réfringence négative sont regroupées en un élément mastiqué et/ou que la première lentille (200) du deuxième module optique (24) est orientée vers le premier module optique (18) dans le trajet de faisceau et/ou que la troisième lentille (204) du deuxième module optique (24) est disposée dans le trajet de faisceau sur le côté orienté vers le plan d'image du système de détection d'image.

5. Microscope d'opération selon l'une quelconque des revendications 2 à 4, **caractérisé en ce que** la première lentille (200) du deuxième module optique (24) et/ou la troisième lentille (204) sont fabriquées à partir d'un matériau de lentille ayant une dispersion partielle anomale.

6. Microscope d'opération selon l'une quelconque des revendications 1 à 5, **caractérisé en ce que** le premier module optique (18) contient un système de grossissement afocal.

7. Microscope d'opération selon l'une quelconque des revendications 1 à 6, **caractérisé en ce que** le deuxième module optique (24) a une réfringence positive.

8. Microscope d'opération selon l'une quelconque des revendications 1 à 7, **caractérisé en ce que** le deuxième module optique (24) est un objectif provoquant la reproduction de la zone d'objet (12) dans le plan d'image (27a, 27b, 27c) du système de détection d'image.

9. Microscope d'opération selon l'une quelconque des revendications 1 à 8, **caractérisé en ce que** le deuxième module optique (24) contient au moins une lentille (200, 2,2, 204) pouvant être déplacée dans le trajet de faisceau (16r) par rapport au plan d'image (27a, 27b, 27c) du système de détection d'image.

**10.** Microscope d'opération selon la revendication 9, **caractérisé par** la présence d'un deuxième module optique (24) disposé de façon à pouvoir être déplacé pour le réglage de la longueur du chemin optique du trajet de faisceau (16r) depuis la zone d'objet (12) jusque dans le plan d'image (27a, 27b, 27c) du système de détection d'image.

**11.** Microscope d'opération selon l'une quelconque des revendications 1 à 10, **caractérisé par** la présence d'une caméra couleurs (26) réalisée sous la forme d'une caméra à 3 puces avec des capteurs d'image disposés dans le plan d'image du système de détection d'image.

**12.** Microscope d'opération selon la revendication 11, **caractérisé par** la présence d'un dispositif d'éclairage (30) avec un faisceau d'éclairage (36) servant à exciter la fluorescence d'un colorant dans la zone d'objet (12) et pouvant introduire un système de filtrage pour le filtrage de lumière dont la longueur d'onde correspond à la longueur d'onde de la lumière fluorescente du colorant fluorescent.

Fig.1

Fig.2

Fig.3

Fig.4

Fig.5

Fig.6

**EP 3 064 980 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4786155 A
- EP 2051051 A2
- EP 2707505 A2
- DE 102006006014 A1